# EUROPEAN PATENT APPLICATION

(11) **EP 4 697 417 A1**
(43) Date of publication of application: **18.02.2026**
(21) Application number: 25192773.7
(22) Date of filing: 30.07.2025
(51) Int. Cl.: H01M 4/92

(54) **FUEL CELL ELECTROCATALYST AND METHOD OF PREPARING SAME**

(30) Priority: 14.08.2024 KR 20240109212; 04.09.2024 KR 20240120125
(71) Applicant: The Carbon Studio Inc., Daejeon 34015 (KR)
(72) Inventor: LEE, Jin Hee, 34013 Daejeon (KR); YOU, Dae Jong, 18484 Hwaseong-si, Gyeonggi-do (KR); KIM, Mi So, 34021 Daejeon (KR); LEE, Bong Ho, 34007 Daejeon (KR); JANG, Jeong Hee, 35215 Daejeon (KR)
(74) Representative: Isarpatent

(57) **Abstract**

Proposed are a fuel cell electrocatalyst including a platinum-based catalyst, wherein the platinum-based catalyst has a triple-layer core-shell structure including a core and a shell layer, the core and the shell layer each independently contain platinum, and an intermediate layer positioned between the core and the shell layer contains a platinum-transition metal alloy, and a method of preparing the same. The fuel cell electrocatalyst is prepared by preparing colloidal platinum particles in a solution phase and alloying a transition metal on the catalyst surface, thereby having the triple-layer core-shell structure. Accordingly, the electrocatalyst exhibits excellent dispersibility and durability.

## Description

### BACKGROUND

### 1. Technical Field

The present disclosure relates to an alloy electrocatalyst for a fuel cell and a method of preparing the same. In particular, the present disclosure relates to a fuel cell electrocatalyst being a platinum-based core-shell alloy catalyst supported on carbon and having high activity and high durability, and to a method of preparing the same.

Two Korean national projects supported by the Korean government associated with this invention are described below.
Project Unique Number 1415186363
Project Serial Number 20020437
Government Department Ministry of Trade, Industry and Energy (MOTIE)
Specialized Institution for Project Management Korea Planning & Evaluation of Industrial Technology (KEIT)
Title of Research Business Nano-Fusion Innovative Product Technology Development
Title of Project Development of Fuel Cell Module Technology for Hydrogen Electric Vehicle Based on Production of Platinum Alloy Nanocatalyst with Platinum Loading of 0.2 g/kW or Less in membrane electrode assembly (MEA)
Supervising Institute THE CARBON STUDIO INC. Research Period January 1, 2023, to December 31, 2025
Project Unique Number 1415185115
Project Serial Number 20022451
Government Department MOTIE
Specialized Institution for Project Management KEIT
Title of Research Business Material and Component Technology Development - Package Type
Title of Project Development of Production Technology for Electrolyte Membrane and Catalyst for PEM Water Electrolysis
Supervising Institute CHEMTROS CO., LTD.
Research Period January 1, 2023, to December 31, 2025

### 2. Description of the Related Art

Fuel cells can be classified into polymer electrolyte membrane fuel cells (PEMFCs), direct methanol fuel cells (DMFCs), phosphoric acid fuel cells (PAFCs), molten carbonate fuel cells (MCFCs), solid oxide fuel cells (SOFCs), and others fuel cells, depending on the types of electrolyte and fuel used.

PEMFCs use hydrogen as fuel at low temperatures (typically below 100°C) and generate electrical energy through electrochemical reactions between hydrogen and oxygen in the air. Such fuel cells produce water (H₂O) as a byproduct during the process of electrochemical reactions and may thus be viewed as an environmentally friendly energy.

A fuel cell is composed of an anode where fuel is oxidized, a cathode where oxygen is reduced, and an electrolyte.

Hydrogen used as fuel is oxidized at the anode to produce hydrogen ions (H+) and electrons. The electrons produced at the anode generate energy via an external conductor, and the hydrogen ions move to the cathode through the electrolyte. At the cathode, oxygen (O₂) supplied from the air reacts with the hydrogen ions transferred to the electrolyte from the anode to produce water (H₂O).

In the meantime, a platinum (Pt)-based electrocatalyst, which is typically stable and highly active for oxygen reduction reactions (ORRs), is used primarily as a component of the anode and the cathode to enhance the ORR activity.

Platinum is a noble metal component that is costly. Therefore, to make fuel cell systems commercially available, it is necessary to develop technology for reducing the platinum loading used in electrodes. In addition, it is essential to employ technology for reducing the platinum loading by enhancing the intrinsic chemical activity of platinum through alloying with transition metals in platinum particles.

Such an alloy catalyst practically exhibits improved activity compared to platinum. However, during the synthesis process, the growth rate of the particles in the alloy catalyst varies due to the difference between the reduction rate of platinum and the reduction rate of transition metals, so the dispersibility of the alloy catalyst on a carbon support is reduced compared to that of platinum catalysts. As a result, improving the initial performance is deemed highly unlikely, and there is also an inherent problem in that the leaching of transition metals, resulting from changes in voltage during fuel cell system operation, may cause rapid performance degradation.

To enhance the intrinsic catalytic activity and address the problem of transition metal leaching, extensive research is undertaken while the development of existing alloy catalysts focuses more on structural modifications of the catalyst rather than simple alloying.

US Patent Application Publication No. US 2023/0395818 A1 discloses a core-shell catalyst having a form in which the inner core is composed of a PtCo alloy catalyst or CoMn alloy catalyst, and the outer shell is composed of Pt, wherein the structural differences between the inner core and outer shell are quantitatively identified through lattice parameter measurements, and the catalyst exhibits superior activity compared to platinum catalysts (Pt).

In addition, US Patent Application Publication No. US 2012/0316054 A1 discloses a carrier-free noble metal catalyst having a form in which the inner core is composed of Ag, Ni, or an alloy thereof, and the outer shell is based on Pt. This catalyst is predicted to exhibit high activity at a particle size of 20 nm.

Patents, as disclosed in the related art, relate to a double-layer core-shell structure that is an alloy catalyst while having a form in which only platinum exists on the catalyst surface. Because the inner core is composed of a platinum alloy catalyst, such a catalyst having a double-layer core-shell structure tends to exhibit poor dispersibility on carbon and large particle sizes, resulting in a problem where the catalytic activity is hindered. As a result, there have been limitations in achieving the performance and durability levels required for commercialization.

### SUMMARY

To address the above-described problems, the present disclosure aims to provide an ORR catalyst for a fuel cell and improve the catalytic activity and durability through partial alloying, rather than alloying the entire fuel cell catalyst.

However, the technical problem to be addressed by the present disclosure is not limited thereto and includes other aspects that will be clearly understood by those skilled in the art to which the present disclosure pertains from the following description.

One embodiment of the present disclosure provides a fuel cell electrocatalyst including a platinum-based catalyst, wherein the platinum-based catalyst has a triple-layer core-shell structure including a core and a shell layer, the core and the shell layer each independently contain platinum, and an intermediate layer positioned between the core and the shell layer contains a platinum-transition metal alloy.

The transition metal may be one, or two or more selected from the group consisting of Fe, Co, Ni, Ti, V, Mn, Cu, Zr, Mo, and W.

The core may contain platinum in an amount in the range of 90 to 95 wt% with respect to an amount of platinum contained in the entire fuel cell electrocatalyst, the intermediate layer may contain platinum in an amount in the range of 5 to 9 wt% with respect to the amount of platinum contained in the entire fuel cell electrocatalyst, and the shell layer may contain platinum in an amount in the range of 0.5 to 1 wt% with respect to the amount of platinum contained in the entire fuel cell electrocatalyst.

The transition metal may be contained in an amount in the range of 33 to 100 wt% with respect to the total amount of platinum contained in the electrocatalyst.

The platinum-based catalyst may be supported on crystalline carbon.

The platinum-based catalyst may be supported in an amount in the range of 20 to 90 wt% with respect to an amount of the crystalline carbon.

Another embodiment of the present disclosure provides a method of preparing a fuel cell electrocatalyst including a platinum-based catalyst, the method including the following steps: dispersing crystalline carbon in a polyol solvent to prepare a first dispersion; heating a platinum precursor dissolved in a polyol solvent to prepare colloidal platinum particles; preparing a mixed solution of the first dispersion and the colloidal platinum particles; adding a transition metal precursor to the mixed solution and heating the resulting product to prepare a catalyst having a double-layer core-shell structure including a core and a shell layer; and subjecting the catalyst having the double-layer core-shell structure to washing, filtration, and a post-processing process to prepare a catalyst having a triple-layer core-shell structure including a core and a shell layer.

The double-layer core-shell structure may have a form in which the core contains platinum, and the shell layer contains a platinum-nonmetal alloy.

In the method, the triple-layer core-shell structure may have a form in which the core and the shell layer each independently contain platinum, and an intermediate layer positioned between the core and the shell layer contains a platinum-transition metal alloy.

In the method, the core may contain platinum in an amount in the range of 90 to 95 wt% with respect to an amount of platinum contained in the entire fuel cell electrocatalyst, the intermediate layer may contain platinum in an amount in the range of 5 to 9 wt% with respect to the amount of platinum contained in the entire fuel cell electrocatalyst, and the shell layer may contain platinum in an amount in the range of 0.5 to 1 wt% with respect to the amount of platinum contained in the entire fuel cell electrocatalyst.

In the method, the transition metal may be one, or two or more selected from the group consisting of Fe, Co, Ni, Ti, V, Mn, Cu, Zr, Mo, and W.

The post-processing process may include a freeze-drying process under vacuum.

In the method, the transition metal may be contained in an amount in the range of 33 to 100 wt% with respect to the total amount of platinum contained in the electrocatalyst.

In the step of preparing the colloidal platinum particles, the heating may be performed at a temperature in the range of 90°C to 130°C.

In the step of preparing the catalyst having the double-layer core-shell structure, the heating may be performed at a temperature in the range of 200°C to 250°C.

The catalyst having the double-layer core-shell structure may be subjected to at least one process among heat treatment and acid treatment before the washing.

The heat treatment may be performed at a temperature in the range of 300°C to 900°C in a vacuum, hydrogen, nitrogen, or argon atmosphere.

The acid treatment may be performed in 0.5 to 1 M nitric acid at a temperature in the range of 60°C to 100°C.

A fuel cell electrocatalyst, according to the present disclosure, has a triple-layer core-shell structure in which the core and the shell layer contain platinum, and an intermediate layer positioned between the core and the shell layer contains a platinum-nonmetal alloy and, therefore, can achieve both dispersibility and durability of the catalyst at the same time.

A method of preparing a fuel cell electrocatalyst, according to the present disclosure, can obtain a triple-layer structured catalyst exhibiting excellent dispersibility and durability by preparing colloidal platinum particles in a solution phase and alloying a transition metal on the catalyst surface.

### BRIEF DESCRIPTION OF THE DRAWINGS

FIG. 1 is a view schematically illustrating triple-layer core-shell structures of a fuel cell electrocatalyst according to the present disclosure;
FIG. 2 is a flowchart describing a method of preparing a fuel cell electrocatalyst according to the present disclosure;
FIG. 3 shows transmission electron microscopy (TEM) images of the colloidal forms of catalysts according to Examples 1 to 3;
FIG. 4 shows TEM images of catalysts according to Examples 1 to 3 and Comparative Examples 1 and 2;
FIG. 5 shows TEM-energy-dispersive X-ray spectroscopy (EDX) images of a catalyst according to Example 2;
FIG. 6 shows X-ray diffraction (XRD) results of catalysts according to Examples 1 to 3 and Comparative Examples 1 and 2;
FIGS. 7A and 7B show ORR and catalytic durability results to demonstrate electrochemical effects of catalysts according to Examples 1 to 3 and Comparative Examples 1 and 2; and
FIGS. 8A and 8B show cell voltage performance and catalytic durability results of catalysts according to Examples 1 to 3 and Comparative Examples 1 and 2.

### DETAILED DESCRIPTION

Hereinafter, embodiments of the present disclosure are to be described in detail so that those skilled in the art to which the present disclosure pertains can easily carry out the present disclosure. However, the present disclosure may be embodied in many different forms and is not limited to the embodiments set forth herein.

As used herein, the term "platinum particles" may refer to either one or both primary platinum particles and secondary platinum particles in the form of a particle structure formed by aggregation of a plurality of primary platinum particles.

Hereinafter, a fuel cell electrocatalyst, according to one embodiment of the present disclosure, is to be described.

One embodiment of the present disclosure provides a fuel cell electrocatalyst including a platinum-based catalyst, wherein the platinum-based catalyst has a triple-layer core-shell structure including a core and a shell layer, the core and the shell layer each independently contain platinum, and an intermediate layer positioned between the core and the shell layer contains a platinum-transition metal alloy.

The fuel cell electrocatalyst, according to the present disclosure, has a triple-layer core-shell structure.

In this case, the triple-layer core-shell structure refers to a stereoscopic structure consisting of three layers, which is composed of: 1) the core positioned at the innermost part of the catalyst, 2) the shell layer positioned at the outermost part, that is, the periphery, of the catalyst, and 3) the intermediate layer positioned between the core and the shell layer.

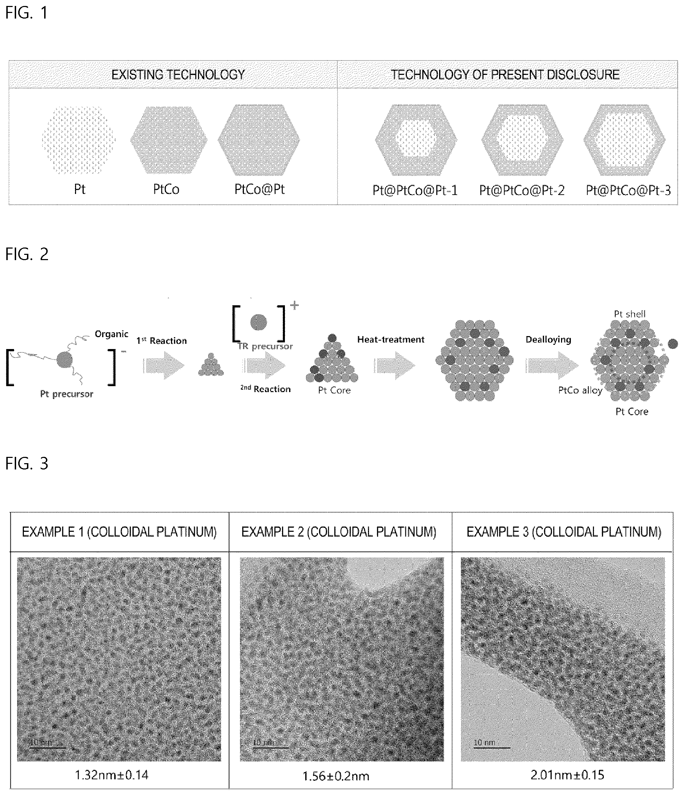

Hereinafter, the description is to be made with reference to FIG. 1.

Referring to FIG. 1, the core and the shell layer of the fuel cell electrocatalyst contain platinum.

The core may contain platinum in an amount in the range of 90 to 95 wt% with respect to an amount of platinum contained in the entire fuel cell electrocatalyst.

The intermediate layer positioned between the core and the shell layer contains a platinum-transition metal alloy. The transition metal may, for example, be one, or two or more selected from the group consisting of Fe, Co, Ni, Ti, V, Mn, Cu, Zr, Mo, and W, but is not limited thereto.

The intermediate layer may contain platinum in an amount in the range of 5 to 9 wt% with respect to the amount of platinum contained in the entire fuel cell electrocatalyst, but is not limited thereto.

In the intermediate layer, platinum and the transition metal do not need to be entirely alloyed, and may partially exist in the form of a complex that is simply physically combined rather than alloyed.

The shell layer, which is not only the outer layer of the intermediate layer but also the outermost layer of the electrocatalyst, contains platinum the amount of which may be contained in the range of 0.5 to 1 wt% with respect to the amount of platinum contained in the entire fuel cell electrocatalyst, but is not limited thereto.

The fuel cell electrocatalyst, according to the present disclosure, includes a triple-layer structured platinum-based catalyst, and the triple-layer structured platinum-based catalyst can reduce the amount of costly platinum by alloying the transition metal while preventing an increase in the surface roughness of platinum, resulting from the dissolution of the transition metal, by treating the shell layer with platinum. In other words, when using the platinum-based catalyst according to the present disclosure, both catalytic activity and durability may be achieved at the same time.

In the electrocatalyst according to one embodiment, the transition metal may be contained in an amount in the range of 33 to 100 wt% with respect to the total amount of platinum contained in the electrocatalyst, but is not limited thereto. When the amount of the transition metal is extremely small without falling within the above range, it may be challenging to control the size, form, dispersion, and the like of platinum through the transition metal. When the amount of transition metal precursor is excessive, some of the transition metal particles reduced in the final step may exist in the outermost layer of the electrocatalyst, which is undesirable.

The platinum-based catalyst may be supported on crystalline carbon.

There is no limitation on the crystalline carbon as long as it is a porous-structured carbon material on which metal particles can be supported.

In the fuel cell electrocatalyst, the platinum particles may be supported in an amount in the range of 20 to 90 wt%, more particularly in the range of 30 to 80 wt%, based on the total weight of the electrocatalyst. The electrocatalyst, according to the present disclosure, can support a large amount of platinum metal particles. Furthermore, as can be confirmed from the experimental examples below, aggregation is hardly observed because the median particle size of platinum is small, the standard deviation of particle size is small, and the platinum-based catalyst is dispersed evenly on the crystalline carbon, serving as a carrier. Ultimately, the electrocatalyst can exhibit excellent electrochemical properties.

Another embodiment of the present disclosure provides a method of preparing a fuel cell electrocatalyst including a platinum-based catalyst.

Hereinafter, the method of preparing a fuel cell electrocatalyst, according to the present disclosure, is to be described with reference to FIG. 2.

Referring to FIG. 2, the method of preparing a fuel cell electrocatalyst including a platinum-based catalyst, according to the present disclosure, includes the following steps: a) dispersing crystalline carbon in a polyol solvent to prepare a first dispersion; b) heating a platinum precursor dissolved in a separate polyol solvent to prepare colloidal platinum particles; c) preparing a mixed solution of the first dispersion and the colloidal platinum particles; d) adding a transition metal precursor to the mixed solution and heating the resulting product to prepare a catalyst having a double-layer core-shell structure including a core and a shell layer; and e) subjecting the catalyst having the double-layer core-shell structure to washing, filtration, and a post-processing process to prepare a catalyst having a triple-layer core-shell structure including a core and a shell layer.

According to the method of the present disclosure, the colloidal platinum particles are formed in the solution, the transition metal precursor is added to the surface of the platinum particles to form the platinum-transition metal alloy particles on the surface of the platinum particles, and then the transition metal on the surface is leached to obtain the catalyst having the triple-layer core-shell structure in which only platinum exists as the outermost particle.

According to the present disclosure, as platinum and the transition metal are alloyed, the amount of platinum used, which is costly, may be reduced. In addition, through partial alloying rather than alloying the entire catalyst, deterioration in durability caused by the increased surface roughness of platinum during a dealloying process in which the transition metal is dissolved, as well as a decrease in the catalytic activity caused by the increased particle size resulting from high-temperature heat treatment during the alloying process, may be prevented.

In Step a), crystalline carbon may be dispersed in a polyol solvent to prepare a first dispersion.

There is no limitation on the crystalline carbon as long as it is a porous-structured carbon material on which metal particles can be supported.

The polyol serves as both a solvent and a reducing agent and may reduce the metal precursor. Such a polyol is not limited but may, for example, be one or more selected from the group consisting of ethylene glycol (EG), propylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, and glycerol. In particular, the polyol may be EG, which is inexpensive, is easily oxidized to glycolaldehyde at high temperatures, and has strong reducing power.

In the present disclosure, the first dispersion may be prepared by dispersing 1 part by weight of the crystalline carbon in 100 to 1000 parts by weight of the polyol. The dispersion may be performed through physical methods using homogenizers, ultrasonic devices, and the like. When the amount of the crystalline carbon is large without falling within the above range or when the amount of the polyol is small, carbon particles, serving as the carrier, are likely to form a lump and aggregate. In addition, when the amount of the crystalline carbon is small or when the amount of the polyol is large, the reaction processability rather deteriorates, making it difficult to demonstrate the intended effect of the present disclosure. In particular, the first dispersion may be prepared by dispersing 1 part by weight of the crystalline carbon in 200 to 400 parts by weight of the polyol.

In Step b), a platinum precursor dissolved in a polyol solvent is heated to prepare colloidal platinum particles.

The type and amount of the transition metal have already been described in the section regarding the electrocatalyst according to the present disclosure, so redundant descriptions thereof are to be omitted herein.

In the step of preparing the colloidal platinum particles, the heating may be performed at a temperature in the range of 90°C to 130°C, but is not limited thereto.

In the preparation of the colloidal platinum particles, the weight ratio of the polyol solvent to the platinum in the platinum precursor may be in the range of 1:488 to 1:732, but is not limited thereto. When the weight ratio of the polyol solvent to the platinum is lower than 1:488, the size of the colloidal platinum particles increases, resulting in reduced activity. In addition, when the weight ratio of the polyol solvent to the platinum is higher than 1:732, the size of the colloidal platinum particles decreases, resulting in the alloying of platinum in the inner core. As a result, a problem may arise in that it is difficult to prepare particles having a triple-layer core-shell structure.

In Step c), the first dispersion obtained in Step a) and the colloidal platinum particles obtained in Step b) are mixed to prepare a mixed solution.

Subsequently, in Step d), a transition metal precursor is added to the mixed solution obtained above, followed by heating the resulting product, to prepare a catalyst having a double-layer core-shell structure (secondary core-shell catalyst).

In this case, the double-layer core-shell structure, having a form in which the core contains platinum, and the outer layer thereof, that is, the shell layer, contains a platinum-nonmetal alloy, corresponds to a state before obtaining the triple-layer structured catalyst, according to the present disclosure.

In the step of preparing the catalyst having the double-layer core-shell structure, the heating may be performed at a temperature in the range of 200°C to 250°C, but is not limited thereto.

Then, in Step e), the catalyst having the double-layer core-shell structure, as obtained above, is subjected to washing, filtration, and a post-processing process to prepare a catalyst having a triple-layer core-shell structure.

In this case, the catalyst having the double-layer core-shell structure may be subjected to a process of heat treatment and/or acid treatment after the washing and the filtration. The heat treatment may be performed at a temperature in the range of 300°C to 900°C in a vacuum, hydrogen, nitrogen, or argon atmosphere for 4 to 8 hours, but is not limited thereto. The acid treatment may be performed in 0.5 to 1 M nitric acid at a temperature in the range of 60°C to 100°C for 2 to 6 hours, but is not limited thereto.

In Step e), the post-processing process is performed after the washing and filtration. The post-processing process may be a freeze-drying process under vacuum. When such a post-processing process is completed, the platinum-based catalyst having the triple-layer core-shell structure, according to the present disclosure, is obtained. Through the process of Step e), the transition metal on the surface of the catalyst having the double-layer core-shell structure (secondary core-shell catalyst) is leached, leaving only platinum on the catalyst surface.

The molar ratio of the transition metal to platinum existing in the catalyst having the double-layer core-shell structure (secondary core-shell catalyst) may be in the range of 1:6 to 1:1, but is not limited thereto.

Moreover, the triple-layer structure is the same as that described above, so redundant descriptions thereof are to be omitted herein.

Hereinafter, the present disclosure is to be described in detail through examples. However, the following examples are disclosed only to illustrate the present disclosure, and the content of the present disclosure is not limited thereto.

### Preparation of Electrocatalyst

### Example 1

To a reflux-type glass reactor, 6.336 g of a platinum precursor (10 wt% of (MEA)₂Pt(OH)₆•xH₂O, purchased from TMI Chem. Co.), 0.387 g of a dispersant (50 wt% of NaH₂PO₂ • H₂O in H₂O), and 435.3 g of EG were added and then reacted at a temperature of 90°C for 4 hours to prepare a platinum colloidal solution.

In this solution, 0.75 g of carbon (420 m²/g, a grain size of 3.1 nm) was mixed for ultrasonic/high-speed mixing for 30 minutes to prepare a carbon dispersion and platinum colloidal particles.

To the above dispersion, 9.38 g of a cobalt precursor (4 wt% of CoCl₂ in EG, purchased from Sigma-Aldrich) was added and then stirred for approximately 60 minutes to prepare an alloy catalyst dispersion.

The resulting dispersion was placed in an autoclave reactor equipped with a stirrer, followed by raising the reactor temperature to approximately 250°C, to perform a reduction reaction. When the reaction was completed, filtration and washing processes were repeatedly performed to obtain a slurry, which was then subjected to a drying process in a vacuum oven at a temperature of 250°C for 4 hours to prepare a catalyst composition.

When the drying process was completed, the catalyst composition was subjected to a heat treatment process in a heat treatment furnace at a temperature of 600°C in a hydrogen gas atmosphere for 6 hours and an acid treatment process in 1 M nitric acid at a temperature of 90°C for 4 hours to perform the filtration and washing processes. After placing the resulting catalyst sample in a freeze-drying device and performing freeze-drying under vacuum, the final electrocatalyst (Pt@PtCo@Pt/C-1) was obtained.

### Example 2

An electrocatalyst (Pt@PtCo@Pt/C-2) was prepared in the same manner as in Example 1, except that, unlike Example 1, the platinum colloidal solution was prepared at a temperature of 110°C to change the size of the colloidal platinum particles.

### Example 3

An electrocatalyst (Pt@PtCo@Pt/C-3) was prepared in the same manner as in Example 1, except that, unlike Example 1, the platinum colloidal solution was prepared at a temperature of 130°C to change the size of the colloidal platinum particles.

### Comparative Example 1

A crystalline carbon dispersion was prepared by mixing 0.75 g of crystalline carbon (420 m²/g, a grain size of 3.1 nm) with 435.3 g of EG and dispersing the carrier using an ultrasonic/high-speed mixer for 30 minutes. In addition, 6.336 g of a platinum precursor (4 wt% of Pt(NH₃)₄Cl₂ •xH₂O, purchased form TMI Chem. Co.) and 0.387 g of a dispersant (10 wt% of NaH₂PO₂•H₂O in H₂O) were stirred for approximately 30 minutes to prepare a dispersion.

The above dispersions were mixed and then placed in a glass reactor equipped with a reflux device, followed by raising the reactor temperature to approximately 165°C, to perform a reduction reaction. When the reaction was completed, filtration and washing processes were repeatedly performed to obtain a slurry, which was then subjected to a drying process in a vacuum oven at a temperature of 250°C for 4 hours to prepare a catalyst composition.

When the drying process was completed, the catalyst composition was subjected to a heat treatment process in a heat treatment furnace at a temperature of 600°C in a hydrogen gas atmosphere for 6 hours and an acid treatment process in 1 M nitric acid at a temperature of 90°C for 4 hours to perform the filtration and washing processes. After placing the resulting catalyst sample in a freeze-drying device and performing freeze-drying under vacuum, the final electrocatalyst (Pt/C) was obtained.

### Comparative Example 2

A crystalline carbon dispersion was prepared by mixing 0.75 g of crystalline carbon (420 m²/g, a grain size of 3.1 nm) with 435.3 g of EG and dispersing the carrier using an ultrasonic/high-speed mixer for 30 minutes. In addition, 6.336 g of a platinum precursor (4 wt% of Pt(NH₃)₄Cl₂ •xH₂O, purchased from TMI Chem. Co.), 0.387 g of a dispersant (10 wt% of NaH₂PO₂ • H₂O in H₂O), and 9.38 g of a cobalt precursor (4 wt% of CoCl₂ in EG, purchased from Sigma-Aldrich) were stirred for approximately 30 minutes to prepare a dispersion.

The above dispersions were placed in an autoclave reactor equipped with a stirrer, followed by raising the reactor temperature to approximately 250°C, to perform a reduction reaction. When the reaction was completed, filtration and washing processes were repeatedly performed to obtain a slurry, which was then subjected to a drying process in a vacuum oven at a temperature of 250°C for 4 hours to prepare a catalyst composition.

When the drying process was completed, the catalyst composition was subjected to a heat treatment process in a heat treatment furnace at a temperature of 600°C in a hydrogen gas atmosphere for 6 hours and an acid treatment process in 1 M nitric acid at a temperature of 90°C for 4 hours to perform the filtration and washing processes. After placing the resulting catalyst sample in a freeze-drying device and performing freeze-drying under vacuum, the final electrocatalyst (PtCo@Pt/C) was obtained.

### Experimental Example 1: TEM Images of Colloidal Platinum Catalyst

The colloidal catalysts of Examples 1 to 3 were observed through TEM images. The results thereof are shown in FIG. 3.

According to FIG. 3, it is confirmed that the colloidal platinum particles in Examples 1 to 3 are uniformly formed, and the particle size somewhat increases as the reaction temperature increases.

As described above, the uniform platinum particles in Examples 1 to 3 are expected to improve dispersion even within the carbon support when forming platinum-transition metal alloy particles.

### Experimental Example 2: TEM Images of Triple-Layer Core-shell Platinum Alloy Catalyst

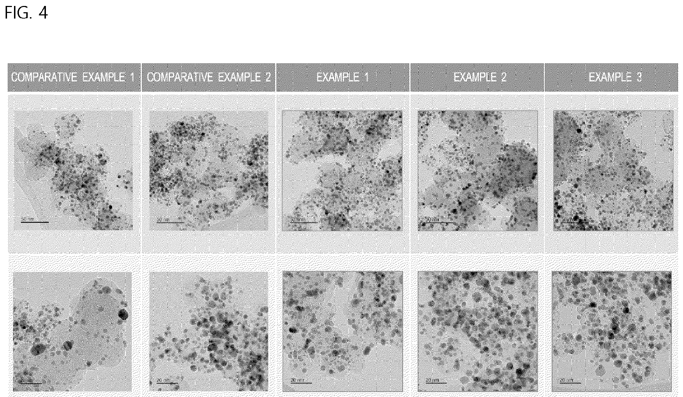

The catalysts of Examples 1 to 3 and Comparative Examples 1 and 2 were observed through TEM images. The results thereof are shown in FIG. 4.

According to FIG. 4, it is seen that the catalysts of Examples 1 to 3 exhibit excellent dispersion compared to the catalysts of Comparative Examples 1 and 2.

### Experimental Example 3: TEM-EDX Images (Structure Confirmation)

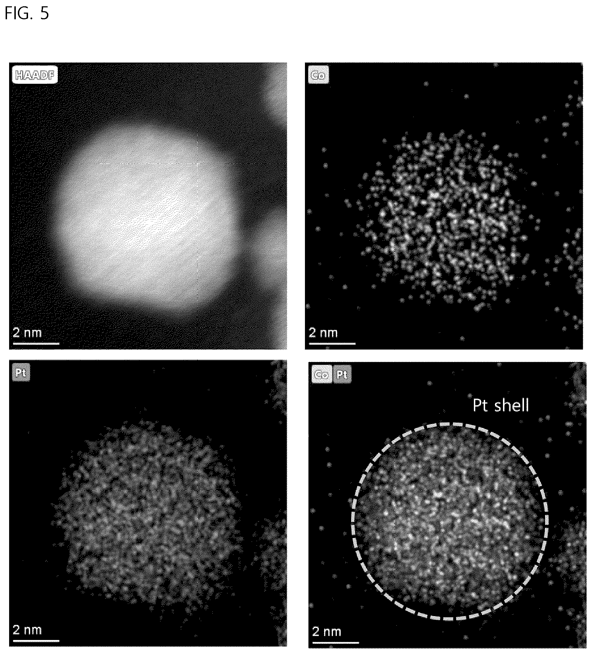

The catalyst of Example 2 was observed through TEM-EDX images. The results thereof are shown in FIG. 5.

According to FIG. 5, it is confirmed that a platinum layer exists at the outermost layer of the catalyst of Example 2.

### Experimental Example 4: XRD and X-ray Fluorescence (XRF)

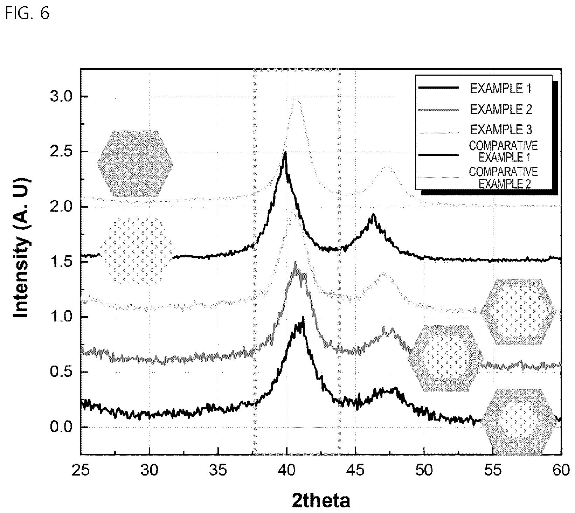

The XRD and XRF results of the catalysts of Examples 1 to 3 and Comparative Examples 1 and 2 are shown in FIG. 6 and Table 1, respectively.

Referring to FIG. 6, it is seen that the catalysts of Examples 1 to 3 exhibit a relatively broad distribution of 2theta values (in the range of 39° to 41°) compared to the catalysts of Comparative Examples 1 and 2. This means that the Pt and PtCo particles do not form a uniform phase, suggesting the coexistence of a Pt core and a PtCo phase.

**[Table 1]**

| Classification | Particle size (nm) | 2theta for (111) peak (°) | XRF (wt%) | |
|---|---|---|---|---|
| | | | Pt | Co |
| Comparative Example 1 | 4.38 | 39.77 | 42.7 | 0 |
| Comparative Example 2 | 4.1 | 40.63 | 45.9 | 2.70 |
| Example 1 | 3.27 | 40.60 | 44.5 | 3.71 |
| Example 2 | 3.50 | 40.54 | 45.6 | 3.83 |
| Example 3 | 3.33 | 40.45 | 44.3 | 2.64 |

Referring to Table 1, it is seen that the catalysts of Examples 1 to 3, prepared as a triple-layer core-shell structure, have small particle sizes compared to the catalysts of Comparative Examples 1 and 2, prepared as platinum or existing PtCo. On this basis, the catalysts of Examples 1 to 3, prepared as a triple-layer core-shell structure, are expected to exhibit excellent electrochemical activity.

### Experimental Example 5: Evaluation Results of Oxygen Reduction Reactivity and Durability

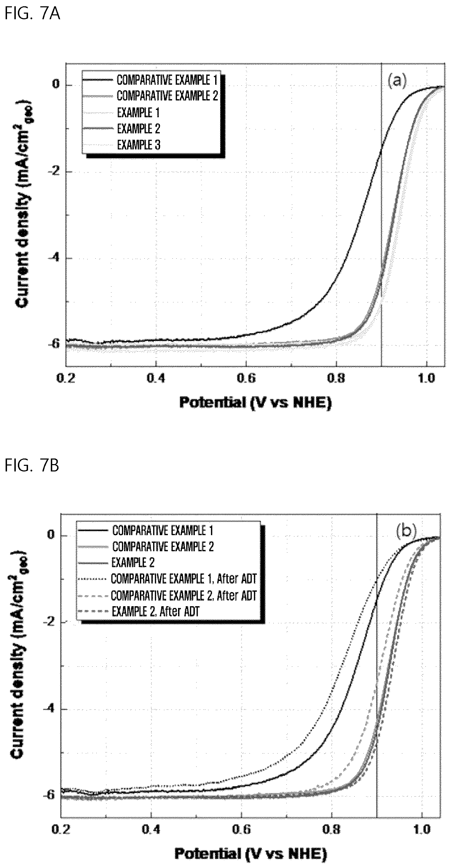

The ORR results, demonstrating the electrochemical effects of the catalysts of Examples 1 to 3 and Comparative Examples 1 and 2, are shown in FIGS. 7A and 7B and Table 2.

**[Table 2]**

| Classification | Mass Activity (MA) (A/mgPt, at 0.9 V) | Decay ratio (%) at 0.6 to 1.0 V and 10,000 cycles |
|---|---|---|
| Comparative Example 1 | 0.039 | -38.46 |
| Comparative Example 2 | 0.302 | -49.34 |
| Example 1 | 0.637 | - |
| Example 2 | 0.620 | -23.71 |
| Example 3 | 0.557 | - |

Referring to FIGS. 7A and 7B and Table 2, it is confirmed that the ORR is superior in the catalysts of Examples 1 to 3 compared to the catalysts of Comparative Examples 1 and 2. In addition, during the durability evaluation conducted under the conditions used to evaluate the catalytic durability, at 0.6 to 1.0 V and 10,000 cycles, Example 2 exhibits a lower performance degradation rate than Comparative Examples 1 and 2, with respect to the initial performance.

### Experimental Example 6: Single Cell Performance

The cell voltage as a function of current density, demonstrating the electrochemical effects of the catalysts of Examples 1 to 3 and Comparative Examples 1 and 2, was measured.

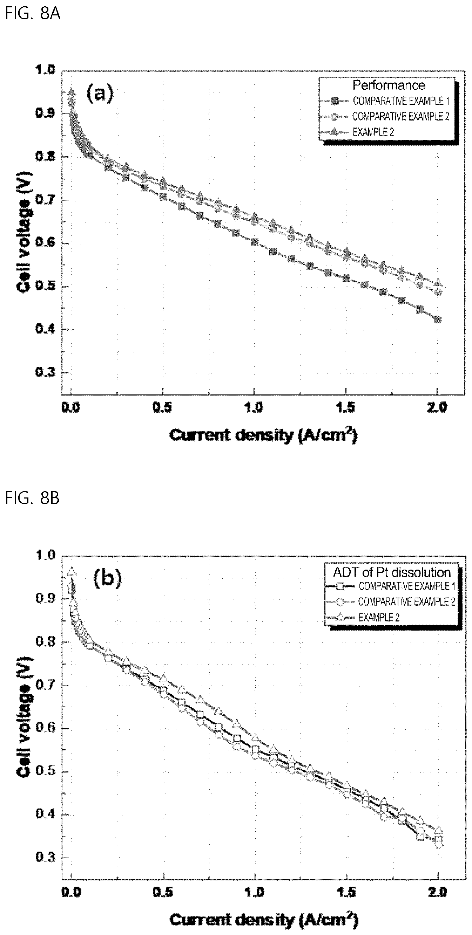

The results thereof are shown in FIGS. 8A and 8B and Table 3.

**[Table 3]**

| Classification | Voltage (V) at 0.8 A/cm², 80°C, and 40% RH | Voltage (V) after durability test at 0.6 to 1.0 V and 30,000 cycles |
|---|---|---|
| Comparative Example 1 | 0.645 | 0.604 |
| Comparative Example 2 | 0.681 | 0.586 |
| Example 2 | 0.695 | 0.639 |

Referring to FIGS. 8A and 8B and Table 3, it is confirmed that at the same current density, the catalyst of Example 2 exhibits excellent voltage performance compared to the catalysts of Comparative Examples 1 and 2. In addition, even during the voltage evaluation after testing the catalytic durability, the catalyst of Example 2 showed excellent performance, so the durability thereof was also confirmed to be superior compared to existing catalysts.

Although the preferred embodiments of the present disclosure have been described in detail hereinabove, the scope of the present disclosure is not limited thereto. That is, various modifications and alternatives made by those skilled in the art using a basic concept of the present disclosure as defined in the appended claims fall within the scope of the present disclosure.

## Claims

1. A fuel cell electrocatalyst comprising a platinum-based catalyst,
wherein the platinum-based catalyst has a triple-layer core-shell structure comprising a core and a shell layer,
the core and the shell layer each independently contain platinum, and
an intermediate layer positioned between the core and the shell layer contains a platinum-transition metal alloy.

2. The electrocatalyst of claim 1, wherein the transition metal is one, or two or more selected from the group consisting of Fe, Co, Ni, Ti, V, Mn, Cu, Zr, Mo, and W.

3. The electrocatalyst of claim 1, wherein the core contains platinum in an amount in a range of 90 to 95 wt% with respect to an amount of platinum contained in the entire electrocatalyst,
the intermediate layer contains platinum in an amount in a range of 5 to 9 wt% with respect to the amount of platinum contained in the entire electrocatalyst, and
the shell layer contains platinum in an amount in a range of 0.5 to 1 wt% with respect to the amount of platinum contained in the entire electrocatalyst.

4. The electrocatalyst of claim 1, wherein the transition metal is contained in an amount in a range of 33 to 100 wt% with respect to the total amount of platinum contained in the electrocatalyst.

5. The electrocatalyst of claim 1, wherein the platinum-based catalyst is supported on crystalline carbon.

6. The electrocatalyst of claim 5, wherein the platinum-based catalyst is supported in an amount in a range of 20 to 90 wt% with respect to an amount of the crystalline carbon.

7. A method of preparing a fuel cell electrocatalyst comprising a platinum-based catalyst, the method comprising:
dispersing crystalline carbon in a polyol solvent to prepare a first dispersion;
heating a platinum precursor dissolved in a polyol solvent to prepare colloidal platinum particles;
preparing a mixed solution of the first dispersion and the colloidal platinum particles;
adding a transition metal precursor to the mixed solution and heating the resulting product to prepare a catalyst having a double-layer core-shell structure comprising a core and a shell layer; and
subjecting the catalyst having the double-layer core-shell structure to washing, filtration, and a post-processing process to prepare a catalyst having a triple-layer core-shell structure comprising a core and a shell layer.

8. The method of claim 7, wherein the double-layer core-shell structure has a form in which the core contains platinum, and the shell layer contains a platinum-nonmetal alloy.

9. The method of claim 7, wherein the triple-layer core-shell structure has a form in which the core and the shell layer each independently contain platinum, and an intermediate layer positioned between the core and the shell layer contains a platinum-transition metal alloy.

10. The method of claim 9, wherein the core contains platinum in an amount in a range of 90 to 95 wt% with respect to an amount of platinum contained in the entire electrocatalyst,
the intermediate layer contains platinum in an amount in a range of 5 to 9 wt% with respect to the amount of platinum contained in the entire electrocatalyst, and
the shell layer contains platinum in an amount in a range of 0.5 to 1 wt% with respect to the amount of platinum contained in the entire electrocatalyst.

11. The method of claim 7, wherein the transition metal is one, or two or more selected from the group consisting of Fe, Co, Ni, Ti, V, Mn, Cu, Zr, Mo, and W.

12. The method of claim 7, wherein the transition metal is contained in an amount in a range of 33 to 100 wt% with respect to the total amount of platinum contained in the electrocatalyst.

13. The method of claim 7, wherein in the preparing of the colloidal platinum particles, the heating is performed at a temperature in a range of 90°C to 130°C.

14. The method of claim 7, wherein in the preparing of the catalyst having the double-layer core-shell structure, the heating is performed at a temperature in a range of 200°C to 250°C.

15. The method of claim 7, wherein the catalyst having the double-layer core-shell structure is inevitably subjected to both processes of heat treatment and acid treatment in the post-processing process, after the washing and the filtration.
